# EUROPÄISCHE PATENTSCHRIFT

(11) **EP 3 559 521 B1**
(45) Veröffentlichungstag und Bekanntmachung des Hinweises auf die Patenterteilung: **26.05.2021**
(21) Anmeldenummer: 17816773.0
(22) Anmeldetag: 13.12.2017
(51) Int. Cl.: F16K 31/50, F16K 31/53, F16K 37/00, F16K 31/04

(54) **VENTILANORDNUNG FÜR EIN KRAFTFAHRZEUG**
VALVE ARRANGEMENT FOR A MOTOR VEHICLE
ENSEMBLE SOUPAPE POUR UN VÉHICULE AUTOMOBILE

(30) Priorität: 22.12.2016 DE 102016226111
(43) Veröffentlichungstag der Anmeldung: 30.10.2019
(73) Patentinhaber: Vitesco Technologies GmbH, 30165 Hannover (DE)
(72) Erfinder: WEIS, Christian, 55257 Budenheim (DE); MIKOLAJEK, Carsten, 64347 Griesheim (DE)
(86) Internationale Anmeldenummer: PCT/EP2017/082706
(87) Internationale Veröffentlichungsnummer: WO 2018/114543

(56) Entgegenhaltungen:
- CN-U- 203 009 981
- DE-A1-102015 108 155

## Beschreibung

Die Erfindung betrifft eine Ventilanordnung für ein Kraftfahrzeug mit den Merkmalen des Oberbegriffs von Patentanspruch 1.

Das Prinzip, zur Betätigung eines Ventils Rotationsbewegungen eines Antriebsmotors in lineare Bewegungen zu übersetzen, wird beispielsweise auch bei Ventilen zur Steuerung der Abgasrückführung in Kraftfahrzeugen angewendet: Es sind verschiedene Ausführungsformen von Ventilen und Ventilanordnungen für Kraftfahrzeuge mit elektrischen Motoren für den Ventiltrieb bekannt. Hierzu wird oftmals eine Getriebeübersetzung genutzt, die mit einer entsprechenden Kinematik die Drehbewegung in eine lineare beziehungsweise translatorische Bewegung übersetzt. Die Übersetzung der Drehbewegung kann beispielsweise über einen Kurbelantrieb oder ein Kulissengetriebe realisiert werden.

Nachteilig an Vorrichtungen dieser Art ist insbesondere, dass bei der Übersetzung der Bewegung unerwünschte Querkräfte entstehen, die auf den Ventilstößel oder den Ventilteller übertragen werden können. Dies führt zu einer höheren Abnutzung und zu einer reduzierten Lebensdauer. Außerdem kann es zu einem Verkanten des Ventils kommen.

Weiterhin nachteilig ist, dass insbesondere Kulissen in Kulissengetrieben mit einer sehr hohen Fertigungsgenauigkeit erzeugt werden müssen, um das Spiel am Ventilteller und Ventilstößel möglichst gering zu halten. Auch ist es nachteilig, dass aufgrund von Bauraumvorgaben und der konstruktiven Ausgestaltung von Kurbelantrieben oder Kulissenantrieben oft nur eine einseitige Lagerung des Ventilstößels vorgesehen ist, wodurch es insbesondere zum Verkippen beziehungsweise Verkanten des Ventilstößels kommen kann.

Darüber hinaus nachteilig ist, dass über einen Kurbelantrieb oder ein Kulissengetriebe realisierte Übersetzungsvorrichtungen komplizierte Montagevorgänge, Fertigungsvorgänge oder aufwendige Einzelbauteile wie etwa schräge Deckel, erforderlich machen, welche wiederum die Fertigung einer Vorrichtung insgesamt besonders aufwändig oder teuer machen können.

Aus der DE 10 2015 108 155 A1 ist eine Ventilanordnung bekannt, die die Merkmale des Oberbegriffs von Patentanspruch 1 aufweist. Die bekannte Ventilanordnung weist insbesondere einen Magnetfeld-Sensor auf, bei dem ein Magnet derart mit dem Ventilstößel verbunden angeordnet ist, dass mit dem Magnetfeld-Sensor die Stellung des Ventilstößels erfasst werden kann.

Eine ähnlich ausgebildete Ventilanordnung ist aus der CN 203 009 981 U bekannt.

Es ist Aufgabe der vorliegenden Erfindung, eine Ventilanordnung für ein Kraftfahrzeug mit einer verbesserten, zuverlässigeren Übersetzung der Drehbewegung eines Antriebsmotors in eine lineare Bewegung eines Ventilstößels zu schaffen.

Diese Aufgabe wird bei einer Ventilanordnung der angegebenen Art durch die kennzeichnenden Merkmale von Patentanspruch 1 gelöst.

Die erfindungsgemäße Ventilanordnung für ein Kraftfahrzeug mit einem Ventilstößel, welcher fest mit einem Verschlussglied verbunden ist, einem Ventilgehäuse, einem Ventilsitz und einem elektrischen Motor, durch welchen der Ventilstößel bewegbar ist, besitzt ein Schraubgetriebe mit einem Außengewinde und einem Innengewinde, wobei der Ventilstößel zumindest in einem Teilbereich ein Außengewinde aufweist und die Ventilanordnung eine Gewindebuchse mit einem Innengewinde oder eine Spindelmutter mit einem Innengewinde aufweist oder der Ventilstößel fest mit einem ein Innengewinde aufweisenden Bauteil verbunden ist, die Ventilanordnung ein Außengewinde aufweist und der Ventilstößel mit einem ersten Getrieberad verbunden ist und wobei die Ventilanordnung zumindest ein zweites Getrieberad aufweist, das so angeordnet ist, dass es eine Drehbewegung direkt oder über Zwischengetriebe auf das erste Getrieberad übertragen kann.

Das erste Getrieberad und das Außengewinde oder das erste Getrieberad und das Innengewinde sind als einteiliges Spritzgussteil gefertigt und die Anordnung weist zusätzlich einen Magnetfeld-Sensor auf, wobei zusätzlich ein Magnet derart mit dem Ventilstößel verbunden angeordnet ist, dass mit dem Magnetfeld-Sensor die Stellung des Ventils erfasst werden kann, und wobei das erste Getrieberad und das Außengewinde oder das erste Getrieberad und das Innengewinde in einem gemeinsamen Spritzgussteil gefertigt sind, welches auch den Magneten mit dem Ventilstößel verbindet, indem der Magnet bei der Herstellung umspritzt ist. Hierdurch wird besonders herstellungsökonomisch ermöglicht, das erste Getrieberad sowie das Außengewinde oder das erste Getrieberad sowie das Innengewinde in einem Zug zu erzeugen und zugleich einen zusätzlichen Magneten am Ventilstößel anzuordnen. Das ermöglicht wiederum erhöhte Prozesssicherheit durch eine verringerte Anzahl von Prozessschritten sowie eine reduzierte Anforderung an Qualitätskontrollen.

Die lineare Bewegung (d. h. ein Öffnen / Schließen) des Ventils / der Ventilanordnung erfolgt durch eine lineare Bewegung des Stößels, an dem der Ventilteller angebracht ist. Der Teller verschließt in einer Stellung den Ventilkanal. Die Ventilanordnung weißt ein Schraubgetriebe mit einem Außengewinde und einem Innengewinde auf und der Stößel wird mit dem Schraubgetriebe in Form eines Spindelantriebs linear bewegt. Dabei wird der Stößel, welcher mit einem Getrieberad verbunden ist, mit einem weiteren Getrieberad, welches von einem elektrischen Motor angetrieben wird, in eine Rotationsbewegung versetzt. Der Stößel weist ein Außengewinde, z. B. eine Gewindespindel, auf, welche in einem Innengewinde läuft, oder der Stößel ist fest mit einem ein Innengewinde aufweisenden Bauteil verbunden, in welchem ein Außengewinde der Ventilanordnung läuft. Infolgedessen tritt eine axiale, lineare Bewegung des Stößels auf, wenn der Stößel radial in Rotation versetzt wird. Insgesamt vollführt der Stößel also zugleich eine Rotationsbewegung um seine Längsachse und eine lineare Bewegung entlang seiner Längsachse, was der Betätigung des Ventils der erfindungsgemäßen Ventilanordnung entspricht.

Bei einer erfindungsgemäßen Ventilanordnung wirkt das Außengewinde in einem Teilbereich des Ventilstößels zusammen mit der Gewindebuchse oder Spindelmutter wie ein Spindeltrieb mit Gewindespindel und Gewindemutter. Dabei bilden ein Außengewinde am Gewindestößel und die Gewindebuchse oder Spindelmutter ein Schraubgetriebe aus, d. h. das Außengewinde am Ventilstößel läuft mit Eingriff in dem Innengewinde der Gewindebuchse.

Bei einer weiteren erfindungsgemäßen Ventilanordnung wirkt das Innengewinde, über welches das fest mit dem Ventilstößel verbundene Bauteil verfügt, wie eine Gewindebuchse oder Spindelmutter und zusammen mit einem Außengewinde der Ventilanordnung wie ein Spindeltrieb mit Gewindespindel und Gewindemutter. Dabei bildet das Außengewinde der Ventilanordnung und das Innengewinde am ersten Getrieberad ein Schraubgetriebe aus, d. h. das fest mit dem Ventilstößel verbundene Bauteil läuft mit seinem Innengewinde auf dem Außengewinde der Ventilanordnung. Das Außengewinde kann beispielsweise fest am Gehäuse der Ventilanordnung angeordnet sein.

Im Kontext einer erfindungsgemäßen Ventilanordnung kommen sowohl kraftschlüssige als auch formschlüssige Getriebe in Frage. Ein Getrieberad kann beispielsweise ein Zahnrad oder ein Reibrad sein. Ein Reibrad kann beispielsweise aus Gummi oder einem Elastomer bestehen.

Eine erfindungsgemäße Ventilanordnung ermöglicht Schaltzeiten im Bereich von 100 ms.

In einer beispielhaften Ausführungsform der vorliegenden Ventilanordnung ist ein Paar von Anschlägen zur Begrenzung einer Bewegung so ausgestaltet, dass der eine Anschlag am ersten Getrieberad angebracht ist und der zweite Anschlag am Gehäuse angebracht ist. Dabei sind die Anschläge so angeordnet, dass sie die Bewegungen des Getrieberades nicht beeinflussen, es sei denn das Getrieberad gelangt in die Anschlagposition. In dieser Position berühren sich die beiden Anschläge und begrenzen so die Rotationsbewegung des Getrieberades um dessen Rotationsachse. Bei der Berührung der Anschläge wirkt eine Kraft in tangentialer Richtung in Bezug auf die Drehbewegung des Getrieberades zwischen den Anschlägen. In einem einfachen Fall weisen die Anschläge jeweils Flächen, welche in Bezug auf die Drehbewegung des Getrieberades radial, d. h. senkrecht zum Vektor der auftretenden Kraft / dem Lagermoment, orientiert sind, auf. Diese Flächen kommen in Begrenzungs-Stellung zur Berührung. Die Gestaltung der Anschläge ist aber nicht auf diese Form begrenzt. Vielmehr dient dieses einfache Beispiel nur zur Veranschaulichung und es kommen vielfältige Formgestaltungen der Anschläge in Frage. Durch das Zusammenspiel der Anschläge wird eine Drehbewegung des ersten Getrieberades - und somit auch des damit fest verbundenen Ventilstößels - um die Rotationsachse des Getrieberades - und somit auch um die Längsachse des Stößels - begrenzt. Im Vergleich zu einer Begrenzung durch Anschläge, die nicht direkt eine Drehbewegung sondern zunächst eine Längsbewegung des Getrieberades (und darüber dann auch als indirekte Folge die Drehbewegung) begrenzen, indem sie sich axial gegenüberliegen, bietet die hier genannte Ausführungsform vorteilhafterweise geringere Reibung zwischen den Anschlägen und dadurch eine höhere Lebensdauer von Anschlägen, Getrieberad und Antriebsmotor.

Bei einer besonders vorteilhaften Ausführungsform einer erfindungsgemäßen Ventilanordnung wird ein kraftschlüssiger Getriebeeingriff zwischen dem ersten und zweiten Getrieberad über den gesamten Hub des Stößels hinweg dadurch erreicht, dass eines der Getrieberäder oder beide Getrieberäder in der Achse der Hubbewegungsrichtung des Stößels so verlängert ist / sind, dass in allen Stößel-Positionen ein ausreichender Überlapp von erstem und zweitem Getrieberad gewährleistet ist.

Bei einer weiteren besonders vorteilhaften Ausführungsform einer erfindungsgemäßen Ventilanordnung mit zumindest einem dritten Getrieberad, welches als Zwischenrad eine Drehbewegung zwischen dem ersten und zweiten Getrieberad vermittelnd überträgt, wird ein kraftschlüssiger Getriebeeingriff zwischen dem ersten und einem dritten Getrieberad oder zwischen dem zweiten Getrieberad und einem dritten Getrieberad über den gesamten Hub des Stößels hinweg dadurch erreicht, dass zumindest ein drittes Getrieberad in der Achse der Hubbewegungsrichtung des Stößels so verlängert ist, dass in allen Stößel-Positionen ein ausreichender Überlapp gewährleistet ist, um kraftschlüssig eine Drehbewegung der Getrieberäder zu erreichen. In einer weiteren besonders vorteilhaften Ausführungsform sind mehrere dritte Getrieberäder als Zwischenräder eingesetzt und entweder eines oder mehrere der Zwischenräder sind verlängert. Zusätzlich kann noch das erste und/oder das zweite Getrieberad verlängert sein.

In einer besonders vorteilhaften Ausführungsform einer erfindungsgemäßen Ventilanordnung liegt das Verschlussglied in der geschlossenen Stellung des Ventils dichtend am Ventilsitz an. Dadurch ergibt sich besonders vorteilhaft, das Ventil durch einen direkten Kontakt zwischen Verschlussglied und Sitz abzudichten. Das Ansitzen des Verschlussglieds am Ventilsitz stellt den Anschlag der linearen Bewegung des Verschlussglieds und somit auch des Ventilstößels dar, der bei einem Schließvorgang des Ventils / der Ventilanordnung die Bewegung begrenzt.

Bei dem Magnetfeld-Sensor istein Magnet derart mit dem Ventilstößel verbunden angeordnet, dass mit dem Magnetfeld-Sensor die Stellung des Ventils erfasst werden kann. Dadurch wird besonders vorteilhaft eine kontaktlose Erfassung der Position und/oder Stellung des Ventilstößels erreicht. Darüber wird wiederum klar, ob sich die Ventilanordnung in einem geöffneten Zustand, einem geschlossenen Zustand oder einem Zwischenzustand befindet.

Bei einer besonders vorteilhaften Ausführungsform einer erfindungsgemäßen Ventilanordnung besitzt der am Ventilstößel angeordnete Magnet eine zylindrische Form. Ein Magnet in zylindrischer Form ist besonders vorteilhaft kostengünstig herzustellen.

Mit einer kontaktlosen Erfassung der Position und/oder Stellung des Ventilstößels kann man zugleich den Schaltzustand des Ventils / der Ventilanordnung insgesamt erfassen. Für eine derartige Erfassung mit einem am Ventilstößel angeordneten Magneten und einem Magnetfeld-Sensor sind Magnete hoher Homogenität besonders geeignet.

Das Außengewinde oder das Innengewinde ist mittels Spritzguss an dem Ventilstößel angebracht. Dadurch kann vorteilhafterweise besonders prozessökonomisch und kostengünstig das Außengewinde angebracht werden.

Das erste Getrieberad und das Außengewinde sind als einteiliges Spritzgussteil gefertigt. Durch die gemeinsame Herstellung können besonders vorteilhaft Zwischenschritte in der Herstellung entfallen und Qualitätskontrollen reduziert werden. Das gilt in ähnlicher Weise für eine Variante der besonders vorteilhaften Ausführungsform einer erfindungsgemäßen Ventilanordnung, bei der das erste Getrieberad und das Innengewinde als einteiliges Bauteil gefertigt sind. Hierbei sind das erste Getrieberad, welches fest mit dem Ventilstößel verbunden wird, und ein Innengewinde in einem Bauteil vereinigt. Das Innengewinde bildet dann mit einem Außengewinde der Ventilanordnung zusammen einen Spindeltrieb aus. Auch hierbei können durch die gemeinsame Herstellung besonders vorteilhaft Zwischenschritte in der Herstellung entfallen und Qualitätskontrollen reduziert werden.

Bei einer besonders vorteilhaften Ausführungsform einer erfindungsgemäßen Ventilanordnung sind ein mechanisches Rückstellelement oder eine Feder mit dem Ventilstößel und einem Ventilgehäuse derart verbunden, dass der Ventilstößel in die Ausgangslage zurück, vorzugsweise in die geschlossene Stellung, gedreht wird, wenn auf das erste Getrieberad kein größeres Drehmoment wirkt. Dadurch wird besonders vorteilhaft ermöglicht, dass beispielsweise bei Ausfall des elektrischen Motors der Ventilstößel dennoch in einen definierten Zustand, nämlich die Ausgangslage oder eine Notstellung, gelangt.

Bei einer weiteren besonders vorteilhaften Ausführungsform einer erfindungsgemäßen Ventilanordnung wird der Ventilstößel in einem Gleitlager oder mehreren Gleitlagern geführt. Besonders vorteilhaft ermöglicht eine derartige Führung einen stabilisierten Bewegungsablauf von Stößelbewegungen.

Bei einer besonders vorteilhaften Ausführungsform einer erfindungsgemäßen Ventilanordnung ist eine zusätzliche Hülse derart um den Ventilstößel am Ventilgehäuse angeordnet, dass zwischen dem Ventilstößel und der Innenwandung der Hülse nur ein Ringspalt, welcher mindestens um einen Faktor 10 kleiner ist als der Durchmesser des Stößels, vorhanden ist, und die Hülse mit ihrer Außenwand am Gehäuse anliegt. Dadurch ergibt sich beispielsweise der Vorteil, Ruß und sonstigen Schmutz besser aus dem Ventilgehäuse im Allgemeinen und dem Lagerbereich des Ventils im Besonderen besser fern zu halten.

Bei einer weiteren besonders vorteilhaften Ausführungsform einer erfindungsgemäßen Ventilanordnung liegt zumindest eine ringartige Dichtung so um den Ventilstößel, dass sie am Ventilgehäuse und am Ventilstößel dichtend anliegt. Dadurch wird besonders vorteilhaft ermöglicht, unerwünschten Eingang von Material, beispielsweise von Schmutz, zwischen Stößel und Gehäuse zu verhindern.

Bei einer besonders vorteilhaften Weiterbildung einer erfindungsgemäßen Ventilanordnung, bei der zumindest eine ringartige Dichtung so um den Ventilstößel liegt, dass sie am Ventilgehäuse und am Ventilstößel dichtend anliegt, ist die ringartige Dichtung aus einem Elastomer-Material gefertigt. Besondere Vorteile bei der Verwendung von Elastomer-Materialien liegen in deren guter Verarbeitbarkeit und guter Dichteigenschaften.

Bei einer besonders vorteilhaften Weiterbildung einer erfindungsgemäßen Ventilanordnung, bei der zumindest eine ringartige Dichtung so um den Ventilstößel liegt, dass sie am Ventilgehäuse und am Ventilstößel dichtend anliegt, und bei der die ringartige Dichtung aus einem Elastomer-Material gefertigt ist, ist zwischen der Dichtung und dem Ventilstößel ein Element aus Polytetrafluorethylen (PTFE) angeordnet. Durch die Anordnung eines Elementes aus PTFE zwischen der Dichtung und dem Ventilstößel wird besonders vorteilhaft ermöglicht, die guten Gleiteigenschaften von PTFE auszunutzen und somit die Gesamtreibung zu reduzieren und zugleich den Abrieb an den Elastomer-Teilen stark zu verringern.

Bei einer weiteren besonders vorteilhaften Ausführungsform einer erfindungsgemäßen Ventilanordnung weist das erste Getrieberad einen Anschlag auf und an dem Ventilgehäuse ist ein weiterer Anschlag angeordnet, welcher zu dem Anschlag am Getrieberad korrespondierend angeordnet ist und eine Drehbewegung des ersten Getrieberads begrenzt. Durch das Zusammenspiel der Anschläge wird eine Drehbewegung des ersten Getrieberades - und somit auch des damit fest verbundenen Ventilstößels - um die Rotationsachse des Getrieberades - und somit auch um die Längsachse des Stößels - begrenzt. Hierdurch wird besonders vorteilhaft ermöglicht, auf einfache Weise bei einem Öffnungsvorgang des Ventils / der Ventilanordnung die Bewegung des Stößels zu begrenzen.

Bei einer weiteren besonders vorteilhaften Ausführungsform einer erfindungsgemäßen Ventilanordnung weist das erste Getrieberad einen Anschlag auf, der vorzugsweise umlaufend gestaltet ist. An dem Gehäuse ist ein weiterer Anschlag so angeordnet, dass er dem Anschlag am Getrieberad korrespondierend gegenüberliegt. Durch das Zusammenspiel der Anschläge wird eine lineare Bewegung des Ventilstößels in Richtung seiner Längsachse begrenzt. Hierdurch wird besonders vorteilhaft ermöglicht, auf einfache Weise bei einem Öffnungsvorgang des Ventils / der Ventilanordnung die Bewegung des Stößels zu begrenzen.

Eine weitere besonders vorteilhafte Ausführungsform einer erfindungsgemäßen Ventilanordnung ist derart ausgeführt, dass sie den Temperaturen bei der Verwendung als Abgasrückführungsventilanordnung widersteht. Damit wird besonders vorteilhaft ermöglicht, eine erfindungsgemäße Ventilanordnung im Kontext von Abgasrückführung einzusetzen.

In einer besonders vorteilhaften Ausführungsform einer erfindungsgemäßen Ventilanordnung ist zumindest ein Getrieberad in der axialen Ausdehnung, d. h. entlang der Rotationsachse, so vergrößert, dass ein ausreichender Eingriff oder eine ausreichende Überlappung der Getrieberäder über den gesamten Hub des Ventilstößels gewährleistet ist. Hierdurch wird besonders vorteilhaft einerseits sichergestellt, dass über den gesamten linearen Bewegungsbereich des Stößels ein ausreichender Eingriff gegeben ist. Andererseits wird besonders vorteilhaft dieser Eingriff auf besonders direkte und zugleich kostengünstige Weise erreicht, sodass auf kompliziertere Kompensationsvorrichtungen verzichtet werden kann.

In einer weiteren besonders vorteilhaften Ausführungsform einer erfindungsgemäßen Ventilanordnung vermittelt zumindest ein zusätzliches Getrieberad die Drehbewegung zwischen erstem und zweitem Getrieberad, und das erste und das zweite Getrieberad stehen nicht in Berührung. Hierdurch wird besonders vorteilhaft ermöglicht, weitere Übertragungsgeometrien und größere Übersetzungen zu ermöglichen und/oder somit besser auf eingeschränkte räumliche Verhältnisse zu reagieren. In einer besonderen Ausführungsform kann auch ein vermittelndes Getrieberad so axial verlängert sein, dass dadurch der ausreichende Getriebeeingriff über den gesamten Hubbereich des Ventilstößels hinweg ermöglicht wird. Es ist aber auch denkbar, dass es mehrere vermittelnde Getrieberäder gibt, wovon eines oder mehrere in axialer Richtung verlängert sein können.

Die Erfindung wird nachfolgend anhand der Figuren der Zeichnung näher erläutert, wobei gleiche oder ähnliche Elemente mit denselben Bezugszeichen versehen sind. Es zeigen:
- Figur 1: eine Seitenansicht einer erfindungsgemäßen Ventilanordnung für ein Kraftfahrzeug mit einem Ventilstößel, welcher fest mit einem Verschlussglied verbunden ist, einem Ventilgehäuse, einem Ventilsitz und einem elektrischen Motor, durch welchen der Ventilstößel bewegbar ist,
- Figur 2: eine Seitenansicht einer erfindungsgemäßen Ventilanordnung für ein Kraftfahrzeug mit mehreren Gleitlagern,
- Figur 3: eine perspektivische Ansicht einer erfindungsgemäßen Ventilanordnung für ein Kraftfahrzeug, welche zusätzlich zu einem ersten Getrieberad und einem zweiten Getrieberad ein drittes Getrieberad aufweist,
- Figur 4: eine perspektivische Ansicht einer erfindungsgemäßen Ventilanordnung für ein Kraftfahrzeug, bei der der Ventilstößel fest mit einem ein Innengewinde aufweisenden Bauteil verbunden ist und die Ventilanordnung ein Außengewinde aufweist.

Der Übersichtlichkeit halber sind eventuelle Zähne von Getrieberädern, die als Zahnräder ausgeführt sind, teilweise nicht angedeutet.

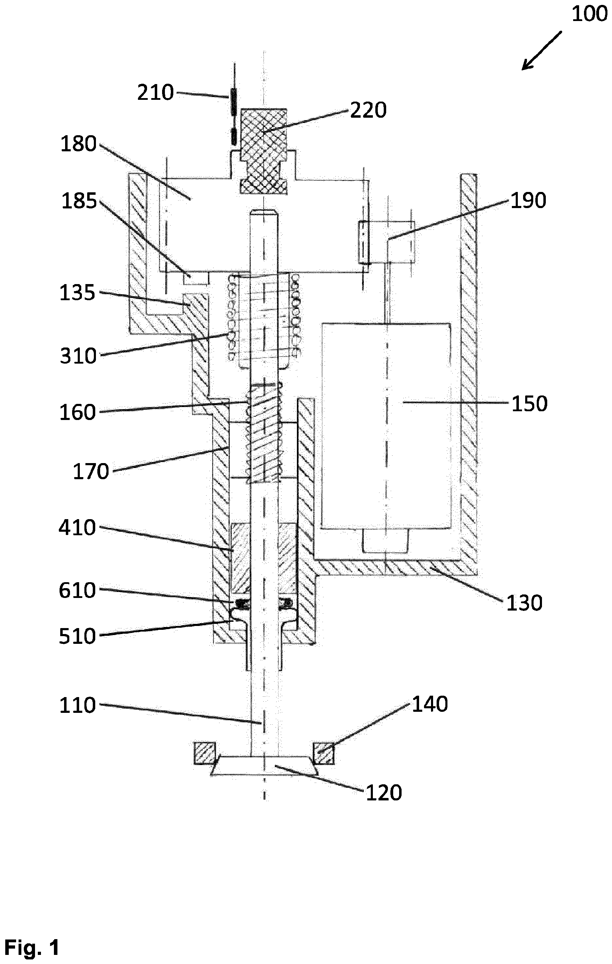

Figur 1 zeigt in einer Schnittzeichnung eine Seitenansicht einer Ausführung einer erfindungsgemäßen Ventilanordnung 100 für ein Kraftfahrzeug. Ein Ventilstößel 110 ist fest mit einem Verschlussglied 120 verbunden. Das Verschlussglied 120 kommt mit einem Ventilsitz 140 so in Berührung, dass der Berührungsbereich dicht ist. Die Ventilanordnung weist ein Ventilgehäuse 130 auf. Ein erstes Getrieberad 180 ist mit dem Ventilstößel 110 verbunden. Ein zweites Getrieberad 190 ist mit einem elektrischen Motor 150 verbunden und so angeordnet, dass es eine Drehbewegung direkt an das erste Getrieberad 180 überträgt. Der Ventilstößel 110 weist in einem Teilbereich ein Außengewinde 160 auf, welches in einer Gewindebuchse oder Spindelmutter 170 läuft. Außengewinde 160 und Gewindebuchse oder Spindelmutter 170 bilden zusammen ein Schraubgetriebe aus. Eine Drehbewegung des Ventilstößels um seine Längsachse führt dadurch zugleich zu einer linearen Bewegung entlang seiner Längsachse. Ein mechanisches Rückstellelement 310 oder eine Feder ist mit dem Ventilstößel 110 und dem Ventilgehäuse 130 derart verbunden, dass der Ventilstößel 110 in die Ausgangslage zurück gedreht wird, wenn auf das erste Getrieberad 180 kein größeres Drehmoment wirkt. Die Ausgangslage ist die geschlossene Stellung der Ventilanordnung / des Ventils. Ein Magnet 220 ist mit dem Ventilstößel 110 derart verbunden, dass ein Magnetfeld-Sensor 210 die Stellung des Ventilstößels erfasst. Der Ventilstößel 110 wird von einem Gleitlager 410 geführt. Eine zusätzliche Hülse 510 ist derart um den Ventilstößel 110 am Ventilgehäuse 130 angeordnet, dass zwischen dem Ventilstößel 110 und der Innenwandung der Hülse 510 nur ein Ringspalt, welcher mindestens um einen Faktor 10 kleiner ist als der Durchmesser des Stößels 110, vorhanden ist, und die Hülse 510 liegt mit ihrer Außenwand am Gehäuse 130 an. Eine ringartige Dichtung 610 liegt so um den Ventilstößel 110, dass sie am Ventilgehäuse 130 und am Ventilstößel 110 dichtend anliegt. Das erste Getrieberad 180 weist einen Anschlag 185 auf und an dem Gehäuse 130 ist ein weiterer Anschlag 135 angeordnet, welcher zu dem Anschlag 185 am Getrieberad 180 korrespondierend angeordnet ist, und eine Drehbewegung des ersten Getrieberads 180 begrenzt. Das erste Getrieberad 180 ist in der Ausdehnung in der Längsrichtung, d. h. entlang der Rotationsachse, so vergrößert, dass ein ausreichender Eingriff oder eine ausreichende Überlappung der Getrieberäder 180, 190 über den gesamten Hub des Ventilstößels 110 gewährleistet ist.

Die Fixierung eines Rückstellementes 310 oder einer Feder am Ventilgehäuse ist aus Gründen der Übersichtlichkeit nicht eingezeichnet.

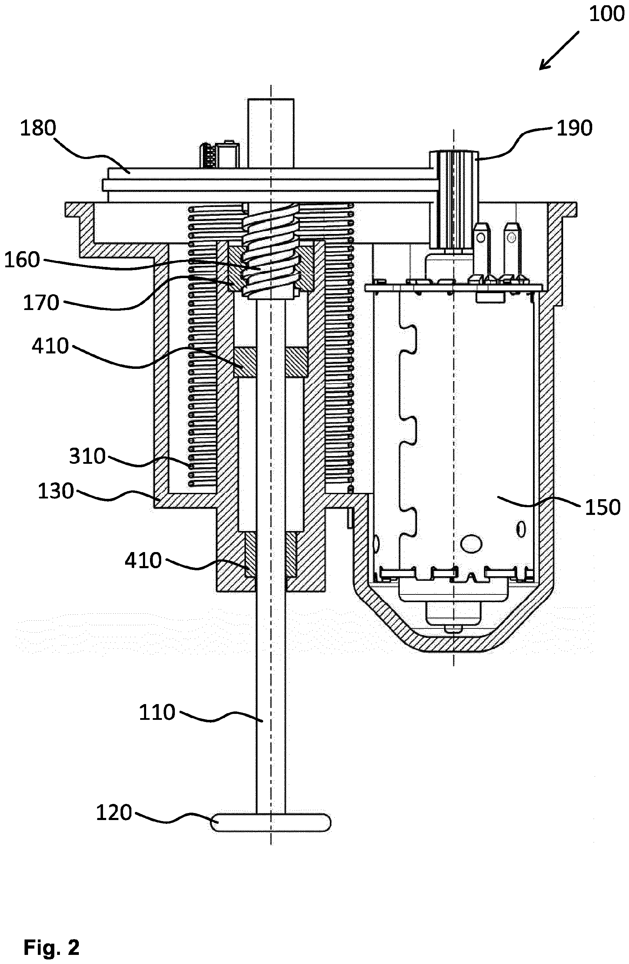

Figur 2 zeigt in einer Schnittzeichnung eine Seitenansicht einer beispielhaften Ausführung einer erfindungsgemäßen Ventilanordnung 100 für ein Kraftfahrzeug. Die in Figur 2 gezeigte Ventilanordnung unterscheidet sich darin von der in Figur 1 gezeigten Ventilanordnung, dass hier das zweite Getrieberad 190 in der Ausdehnung in der Längsrichtung, d. h. entlang der Rotationsachse, so vergrößert ist, dass ein ausreichender Eingriff oder eine ausreichende Überlappung der Getrieberäder 180, 190 über den gesamten Hub des Ventilstößels 110 gewährleistet ist.

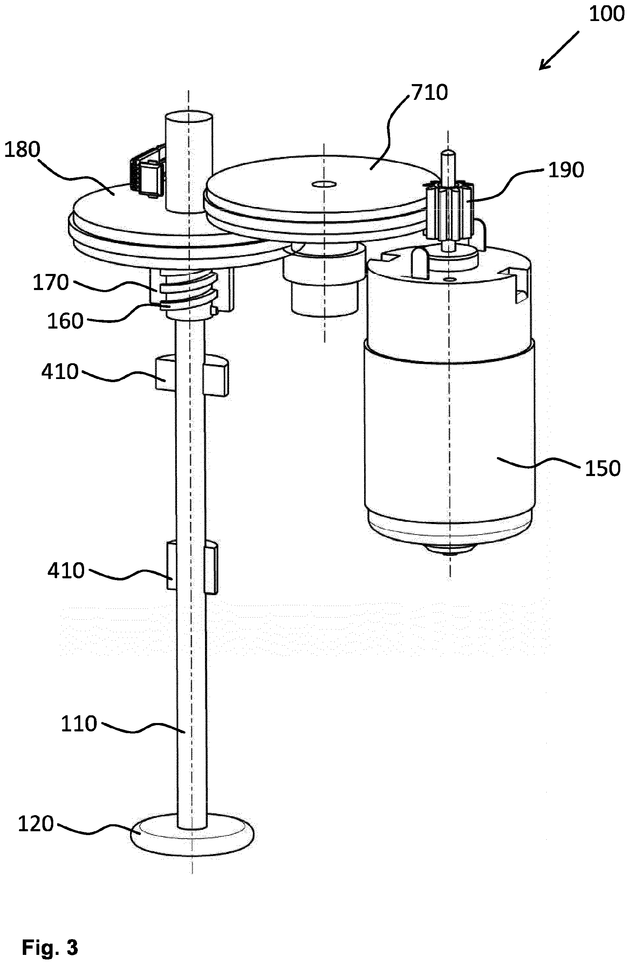

Figur 3 zeigt in einer perspektivischen Ansicht eine beispielhafte Ausführung einer erfindungsgemäßen Ventilanordnung 110. Die in Figur 3 gezeigte Ventilanordnung unterscheidet sich darin von der in den Figuren 1 und 2 gezeigten Ventilanordnungen, dass hier mit einem zusätzlichen Getrieberad 710 die Drehbewegung zwischen erstem Getrieberad 180 und zweitem Getrieberad 190 vermittelt wird. Das erste Getrieberad 180 und das zweite Getrieberad 190 stehen hierbei nicht in Berührung.

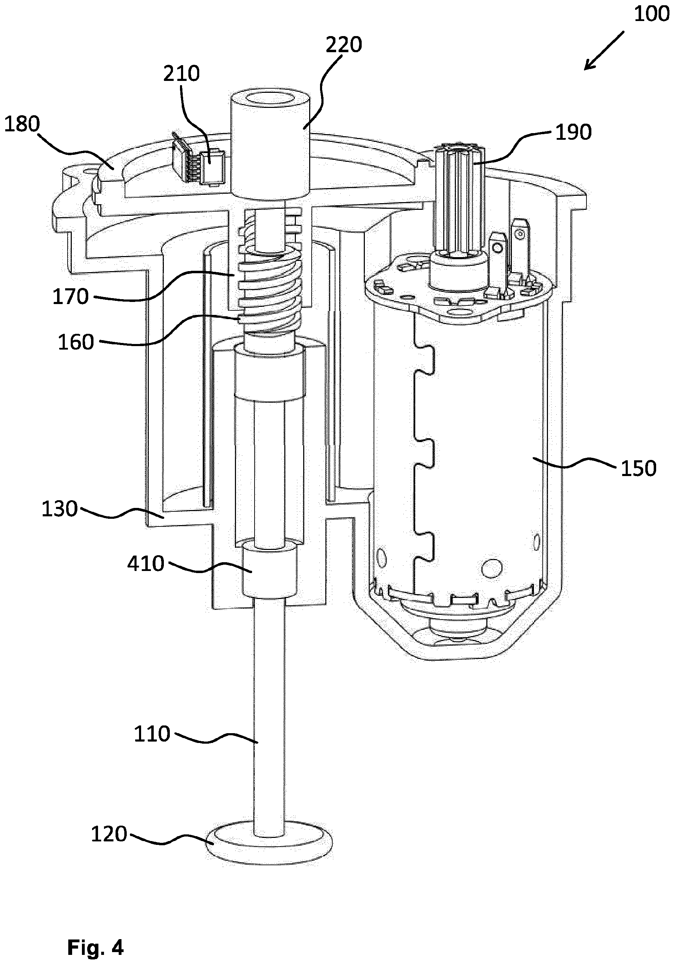

Figur 4 zeigt in einer perspektivischen Ansicht eine beispielhafte Ausführung einer erfindungsgemäßen Ventilanordnung 100, bei der der Ventilstößel 110 fest mit einem ein Innengewinde 170 aufweisenden Bauteil verbunden ist und die Ventilanordnung 100 ein Außengewinde 160 aufweist. Ein Ventilstößel 110 ist fest mit einem Verschlussglied 120 an seinem einen Ende und mit einem ersten Getrieberad 180 verbunden. Das Getrieberad 180 weist ein Innengewinde 170 auf. Ein Außengewinde 160 umgibt den Stößel 110, ist jedoch nicht mit ihm verbunden. In anderen Worten: Der Stößel 110 ragt durch das Außengewinde 160 hindurch und kann sich gegenüber dem Außengewinde um seine Längsachse verdrehen oder entlang seiner Längsachse durch das Außengewinde hindurch bewegen. Das Innengewinde 170 läuft auf dem Außengewinde 160, welches fest mit dem Gehäuse 130 verbunden ist. Wenn der Motor 150 eine Drehbewegung auf das zweite Getrieberad 190 überträgt, welches sich in Eingriff mit dem ersten Getrieberad 180 befindet, wird auch das erste Getrieberad 180 in Drehung versetzt.

Das Innengewinde 170 und das Außengewinde 160 bilden zusammen ein Schraubgetriebe aus, sodass eine Drehbewegung des ersten Getrieberades 180 auch zu einer linearen Bewegung des ersten Getrieberades 180 entlang seiner Drehachse führt. Da das erste Getrieberad 180 fest mit dem Ventilstößel 110 verbunden ist, erfährt auch der Stößel 110 eine Drehbewegung um die Drehachse des Getrieberades, welches somit auch die Drehachse des Stößels ist, und zugleich eine lineare Bewegung entlang dieser Drehachse.

## Patentansprüche

1. Ventilanordnung (100) für ein Kraftfahrzeug mit einem Ventilstößel (110), welcher fest mit einem Verschlussglied (120) verbunden ist, einem Ventilgehäuse (130), einem Ventilsitz (140) und einem elektrischen Motor (150), durch welchen der Ventilstößel (110) bewegbar ist, wobei die Ventilanordnung (100) ein Schraubgetriebe mit einem Außengewinde (160) und einem Innengewinde (170) aufweist, wobei der Ventilstößel (110) zumindest in einem Teilbereich ein Außengewinde (160) aufweist und die Ventilanordnung (100) eine Gewindebuchse mit einem Innengewinde (170) oder eine Spindelmutter mit einem Innengewinde (170) aufweist oder der Ventilstößel (110) fest mit einem ein Innengewinde (170) aufweisenden Bauteil verbunden ist und die Ventilanordnung (100) ein Außengewinde (160) aufweist und wobei der Ventilstößel (110) mit einem ersten Getrieberad (180) verbunden ist, die Ventilanordnung (100) zumindest ein zweites Getrieberad (190) aufweist, das so angeordnet ist, dass es eine Drehbewegung direkt oder über Zwischengetriebe auf das erste Getrieberad (180) übertragen kann und wobei die Ventilanordnung (100) zusätzlich einen Magnetfeld-Sensor (210) aufweist, bei dem ein Magnet (220) derart mit dem Ventilstößel (110) verbunden angeordnet ist, dass mit dem Magnetfeld-Sensor (210) die Stellung des Ventilstößels (110) erfasst werden kann, **dadurch gekennzeichnet, dass** das Außengewinde (160) oder das Innengewinde (170) mittels Spritzguss am Ventilstößel (110) angebracht ist und dass das erste Getrieberad (180) und das Außengewinde (160) oder das erste Getrieberad (180) und das Innengewinde (170) in einem gemeinsamen Spritzgussteil gefertigt sind, welches auch den Magneten (220) mit dem Ventilstößel (110) verbindet, indem der Magnet (220) bei der Herstellung umspritzt ist.

2. Ventilanordnung (100) nach Anspruch 1, **dadurch gekennzeichnet, dass** ein mechanisches Rückstellelement (310) oder eine Feder mit dem Ventilstößel (110) und einem Ventilgehäuse (130) derart verbunden ist, dass der Ventilstößel (110) in die Ausgangslage zurück, vorzugsweise in die geschlossene Stellung, gedreht wird, wenn auf das erste Getrieberad (180) kein größeres Drehmoment wirkt.

3. Ventilanordnung (100) nach einem der Ansprüche 1 oder 2, d a **durch gekennzeichnet**, dass der Ventilstößel (110) in einem Gleitlager oder mehreren Gleitlagern (410) geführt wird.

4. Ventilanordnung (100) nach einem der vorangehenden Ansprüche, **dadurch gekennzeichnet, dass** eine zusätzliche Hülse (510) derart um den Ventilstößel (110) am Ventilgehäuse (130) angeordnet ist, dass zwischen dem Ventilstößel (110) und der Innenwandung der Hülse (510) nur ein Ringspalt, welcher um mindestens einen Faktor 10 kleiner ist als der Durchmesser des Stößels (110), vorhanden ist und die Hülse (510) mit ihrer Außenwand am Gehäuse (130) anliegt.

5. Ventilanordnung (100) nach einem der vorangehenden Ansprüche, **dadurch gekennzeichnet, dass** zumindest eine ringartige Dichtung (610) so um den Ventilstößel (110) liegt, dass sie am Ventilgehäuse (130) und am Ventilstößel (110) dichtend anliegt.

6. Ventilanordnung (100) nach Anspruch 5, **dadurch gekennzeichnet, dass** die ringartige Dichtung (610) aus einem Elastomer-Material gefertigt ist.

7. Ventilanordnung (100) nach Anspruch 6, **dadurch gekennzeichnet, dass** zwischen der Dichtung (610) und dem Ventilstößel (110) ein Element aus PTFE (620) angeordnet ist.

8. Ventilanordnung (100) nach einem der vorangehenden Ansprüche, **dadurch gekennzeichnet, dass** das erste Getrieberad (180) einen Anschlag (185) aufweist und an dem Gehäuse (130) ein weiterer Anschlag (135) angeordnet ist, welcher zu dem Anschlag (185) am Getrieberad (180) korrespondierend angeordnet ist und eine Drehbewegung des ersten Getrieberads (180) begrenzt.

9. Ventilanordnung (100) nach einem der vorangehenden Ansprüche, **dadurch gekennzeichnet, dass** sie derart ausgeführt ist, dass sie den Temperaturen bei der Verwendung als Abgasrückführungsventilanordnung (100) widersteht.

10. Ventilanordnung (100) nach einem der vorangehenden Ansprüche, **dadurch gekennzeichnet, dass** zumindest ein zusätzliches Getrieberad (710) die Drehbewegung zwischen erstem Getrieberad (180) und zweitem Getrieberad (190) vermittelt und das erste Getrieberad (180) und das zweite Getrieberad (190) nicht in Berührung stehen.

11. Ventilanordnung (100) nach einem der vorangehenden Ansprüche, **dadurch gekennzeichnet, dass** zumindest ein Getrieberad (180, 190, 710) in der Ausdehnung entlang der Rotationsachse so vergrößert ist, dass ein ausreichender Eingriff oder eine ausreichende Überlappung der Getrieberäder (180, 190) über den gesamten Hub des Ventilstößels (110) gewährleistet ist.

## Claims

1. Valve arrangement (100) for a motor vehicle, having a valve plunger (110) which is fixedly connected to a closure member (120), having a valve housing (130), having a valve seat (140), and having an electric motor (150) by way of which the valve plunger (110) is able to be moved, wherein the valve arrangement (100) has a worm gear with an outer thread (160) and an inner thread (170), wherein the valve plunger (110) has, at least in a sub-region, an outer thread (160) and the valve arrangement (100) has a threaded sleeve with an inner thread (170) or a spindle nut with an inner thread (170), or the valve plunger (110) is fixedly connected to a component having an inner thread (170) and the valve arrangement (100) has an outer thread (160), and wherein the valve plunger (110) is connected to a first gearwheel (180), and the valve arrangement (100) has at least one second gearwheel (190), which is arranged such that it can transmit a rotational movement directly, or via an intermediate gearing, to the first gearwheel (180), and wherein the valve arrangement (100) additionally has a magnetic field sensor (210), for which a magnet (220) is arranged in a manner connected to the valve plunger (110) such that the setting of the valve plunger (110) can be detected by the magnetic field sensor (210), **characterized in that** the outer thread (160) or the inner thread (170) is attached to the valve plunger (110) by means of injection moulding, and **in that** the first gearwheel (180) and the outer thread (160) or the first gearwheel (180) and the inner thread (170) are produced in a joint injection moulding, the latter also connecting the magnet (220) to the valve plunger (110) **in that** the magnet (220) is encapsulated during the production.

2. Valve arrangement (100) according to Claim 1, **characterized in that** a mechanical restoring element (310) or a spring is connected to the valve plunger (110) and a valve housing (130) such that the valve plunger (110) is rotated back into the starting position, preferably into the closed setting, if a greater torque does not act on the first gearwheel (180).

3. Valve arrangement (100) according to either of Claims 1 or 2, **characterized in that** the valve plunger (110) is guided in a plain bearing or multiple plain bearings (410) .

4. Valve arrangement (100) according to one of the preceding claims, **characterized in that** an additional sleeve (510) is arranged on the valve housing (130) around the valve plunger (110) such that just an annular gap, which is at least a factor of 10 smaller than the diameter of the plunger (110), is present between the valve plunger (110) and the inner wall of the sleeve (510), and the sleeve (510) bears with its outer wall against the housing (130).

5. Valve arrangement (100) according to one of the preceding claims, **characterized in that** at least one ring-like seal (610) is situated around the valve plunger (110) such that it bears sealingly against the valve housing (130) and the valve plunger (110).

6. Valve arrangement (100) according to Claim 5, **characterized in that** the ring-like seal (610) is produced from an elastomer material.

7. Valve arrangement (100) according to Claim 6, **characterized in that** an element composed of PTFE (620) is arranged between the seal (610) and the valve plunger (110) .

8. Valve arrangement (100) according to one of the preceding claims, **characterized in that** the first gearwheel (180) has a stop (185), and a further stop (135) is arranged on the housing (130), which further stop is arranged in a manner corresponding to the stop (185) on the gearwheel (180) and limits a rotational movement of the first gearwheel (180).

9. Valve arrangement (100) according to one of the preceding claims, **characterized in that** said valve arrangement is designed such that it withstands the temperatures in the use as an exhaust-gas recirculation valve arrangement (100).

10. Valve arrangement (100) according to one of the preceding claims, **characterized in that** at least one additional gearwheel (710) imparts the rotational movement between the first gearwheel (180) and the second gearwheel (190), and the first gearwheel (180) and the second gearwheel (190) are not in contact.

11. Valve arrangement (100) according to one of the preceding claims, **characterized in that** at least one gearwheel (180, 190, 710) is enlarged in the extent along the axis of rotation such that sufficient engagement or sufficient overlap of the gearwheels (180, 190) is ensured over the entire stroke of the valve plunger (110).

## Revendications

1. Ensemble de soupape (100) pour un véhicule automobile, comprenant un poussoir de soupape (110) qui est relié solidement à un élément de fermeture (120), un corps de soupape (130), un siège de soupape (140) et un moteur électrique (150) qui permet de déplacer le poussoir de soupape (110), l'ensemble de soupape (100) présentant un engrenage hélicoïdal doté d'un filetage (160) et d'un taraudage (170), dans lequel le poussoir de soupape (110) présente au moins dans une zone partielle un filetage (160) et l'ensemble de soupape (100) présente une douille filetée dotée d'un taraudage (170) ou un écrou de broche doté d'un taraudage (170) ou le poussoir de soupape (110) est relié solidement à un composant présentant un taraudage (170) et l'ensemble de soupape (100) présente un filetage (160), et dans lequel le poussoir de soupape (110) est relié à une première roue d'engrenage (180), l'ensemble de soupape (100) présente au moins une deuxième roue d'engrenage (190) qui est disposée de telle sorte qu'elle peut transmettre un mouvement de rotation directement ou par un engrenage intermédiaire à la première roue d'engrenage (180), et dans lequel l'ensemble de soupape (100) présente en outre un capteur de champ magnétique (210) pour lequel un aimant (220) est relié au poussoir de soupape (110) de telle sorte que le capteur de champ magnétique (210) permet de détecter la position du poussoir de soupape (110), **caractérisé en ce que** le filetage (160) ou le taraudage (170) est appliqué au poussoir de soupape (110) par moulage par injection, et **en ce que** la première roue d'engrenage (180) et le filetage (160) ou la première roue d'engrenage (180) et le taraudage (170) sont fabriqués en une pièce moulée par injection commune qui relie également l'aimant (220) au poussoir de soupape (110) **en ce que** l'aimant (220) est surmoulé lors de la fabrication.

2. Ensemble de soupape (100) selon la revendication 1, **caractérisé en ce qu'**un élément de rappel mécanique (310) ou un ressort est relié au poussoir de soupape (110) et à un corps de soupape (130) de telle sorte que le poussoir de soupape (110) est ramené à la position de départ, de préférence à la position fermée, si aucun couple significatif n'agit sur la première roue d'engrenage (180).

3. Ensemble de soupape (100) selon l'une quelconque des revendications 1 ou 2, **caractérisé en ce que** le poussoir de soupape (110) est guidé dans un palier lisse ou dans plusieurs paliers lisses (410).

4. Ensemble de soupape (100) selon l'une quelconque des revendications précédentes, **caractérisé en ce qu'**une douille supplémentaire (510) est disposée autour du poussoir de soupape (110) sur le corps de soupape (130) de telle sorte qu'entre le poussoir de soupape (110) et la paroi intérieure de la douille (510), il n'existe qu'un espace annulaire qui est inférieur au diamètre du poussoir (110) au moins d'un facteur 10 et la douille (510) est adjacente au corps (130) par sa paroi extérieure.

5. Ensemble de soupape (100) selon l'une quelconque des revendications précédentes, **caractérisé en ce qu'**au moins un joint (610) de type bague est placé autour du poussoir de soupape (110) de telle sorte qu'il s'applique de manière étanche sur le corps de soupape (130) et le poussoir de soupape (110).

6. Ensemble de soupape (100) selon la revendication 5, **caractérisé en ce que** le joint (610) de type bague est fabriqué dans un matériau élastomère.

7. Ensemble de soupape (100) selon la revendication 6, **caractérisé en ce qu'**un élément en PTFE (620) est disposé entre le joint (610) et le poussoir de soupape (110).

8. Ensemble de soupape (100) selon l'une quelconque des revendications précédentes, **caractérisé en ce que** la première roue d'engrenage (180) présente une butée (185), et **en ce que** sur le corps (130) est disposée une butée supplémentaire (135) qui est disposée de manière correspondante à la butée (185) sur la roue d'engrenage (180) et limite un mouvement de rotation de la première roue d'engrenage (180).

9. Ensemble de soupape (100) selon l'une quelconque des revendications précédentes, **caractérisé en ce qu'**il est réalisé de telle sorte qu'il résiste aux températures lors de l'utilisation comme un ensemble de soupape de recyclage des gaz d'échappement (100).

10. Ensemble de soupape (100) selon l'une quelconque des revendications précédentes, **caractérisé en ce qu'**au moins une roue d'engrenage supplémentaire (710) transmet le mouvement de rotation entre la première roue d'engrenage (180) et la deuxième roue d'engrenage (190), et la première roue d'engrenage (180) et la deuxième roue d'engrenage (190) ne sont pas en contact.

11. Ensemble de soupape (100) selon l'une quelconque des revendications précédentes, **caractérisé en ce qu'**au moins une roue d'engrenage (180, 190, 710) est agrandie en extension le long de l'axe de rotation de telle sorte qu'une mise en prise suffisante ou un chevauchement suffisant des roues d'engrenage (180, 190) est assuré (e) sur toute la course du poussoir de soupape (110).
